# EUROPEAN PATENT SPECIFICATION

(11) **EP 3 048 339 B1**
(45) Date of publication and mention of the grant of the patent: **08.03.2017**
(21) Application number: 15173892.9
(22) Date of filing: 25.06.2015
(51) Int. Cl.: F16H 61/44, F03D 15/00

(54) **HYDRAULIC SYSTEM, WIND TURBINE POWER GENERATING APPARATUS, AND OPERATION METHOD OF THE SAME**
HYDRAULISCHES SYSTEM, WINDTURBINENSTROMERZEUGUNGSVORRICHTUNG UND BETRIEBSVERFAHREN DAFÜR
SYSTÈME HYDRAULIQUE, APPAREIL DE GÉNÉRATION D'ÉNERGIE ÉOLIENNE ET SON PROCÉDÉ DE FONCTIONNEMENT

(30) Priority: 02.12.2014 JP 2014243751
(43) Date of publication of application: 27.07.2016
(73) Proprietor: MITSUBISHI HEAVY INDUSTRIES, LTD., Tokyo 108-8215 (JP)
(72) Inventor: MIKI, Takeshi, TOKYO, 108-8215 (JP); HAYASHI, Kentaro, TOKYO, 108-8215 (JP)
(74) Representative: Intès, Didier Gérard André

(56) References cited:
- EP-A1- 2 261 503
- WO-A1-2012/164789
- WO-A1-2014/006663
- WO-A2-2011/011682
- DE-A1-102009 033 272
- GB-A- 2 477 997
- GB-A- 2 480 684
- US-A1- 2012 045 328

## Description

### TECHNICAL FIELD

The present disclosure relates to a hydraulic system including a plurality of hydraulic machines, such as hydraulic pumps or hydraulic motors, connected to a hydraulic line in parallel, a renewable energy power generating apparatus, and an operation method of the same.

### BACKGROUND

As a hydraulic machine such as a hydraulic pump and a hydraulic motor, generally known is a configuration in which a plurality of cylinders and pistons is arranged around a rotation shaft. For instance, Patent Document 1 describes a hydraulic transmission including a hydraulic pump driven by rotation of a rotation shaft, a hydraulic motor connected to a generator, and hydraulic lines disposed between the hydraulic pump and the hydraulic motor.

In a hydraulic transmission of the above type, a hydraulic motor includes, for instance, a plurality of sets of a piston and a cylinder, a cam rotated by the pistons which reciprocate cyclically in the cylinders, and high pressure valves and low pressure valves which are opened and closed in accordance with the reciprocating motion of the pistons. As the high pressure valves and the low pressure valves are opened and closed, the active state and the non-active state are determined for the working chambers each surrounded by the corresponding cylinder and the corresponding piston, and thereby displacement of the hydraulic motor changes.
Patent Document 2, which constitutes the closest prior art for independent claims 1 and 10, describes a power generating apparatus of renewable energy type in which the hydraulic transmission includes a variable displacement hydraulic pump which is driven by a rotating shaft, a variable displacement hydraulic motor whose output shaft is connected to a synchronous generator k (k is any integer in the range of 1 to N) and a high and a low pressure oil line which are arranged between the hydraulic pump and the hydraulic motor wherein frequency and a phase of a terminal voltage of each synchronous generator are synchronized with the grid.

### Citation List

### Patent Literature

- Patent Document 1:: US2010/0032959
- Patent Document 2:: WO2012/164789

### SUMMARY

Meanwhile, in the above hydraulic system, vibration may be caused by rotation of the hydraulic machine. Especially in a case where a plurality of hydraulic machines is connected to hydraulic lines in parallel, the magnitude of vibration may increase with time. For instance, in a case where vibration has occurred in a hydraulic motor as described above, excessive vibration may be generated in a casing of the hydraulic motor or the hydraulic pump, or in hydraulic piping, which may result in a serious trouble of a hydraulic transmission. Thus, to operate a hydraulic machine smoothly, it is required to reduce vibration caused by rotation of the hydraulic machine.

In this regard, Patent Document 1 does not disclose any specific configuration for reducing vibration caused by rotation of a hydraulic machine.

In view of the above issues, an object of at least one embodiment of the present invention is to provide a hydraulic system whereby it is possible reduce vibration caused by rotation of a hydraulic machine, a renewable energy power generating apparatus, and an operation method of the same.

As a result of intensive researches to reduce vibration of a hydraulic machine, such as a hydraulic pump or a hydraulic motor, the present inventors found that, in a hydraulic system in which a plurality of hydraulic machines is connected to a hydraulic line in parallel, there is a correlation between vibration of the hydraulic machines and a rotational phase difference among the hydraulic machines.

Specifically, the present inventors at first found that vibration of hydraulic machines is related to pulsation of a hydraulic line. Pulsation of a hydraulic line is considered to be affected by the in-cylinder pressures (pressures in the working chambers) of cylinders because hydraulic machines are connected to a hydraulic line. Thus, as a result of tests, it was found that pulsation of a hydraulic line is affected redundantly by the in-cylinder pressures of the plurality of hydraulic machines connected to the hydraulic line in parallel, in a case where the plurality of hydraulic machines are connected to the hydraulic line in parallel.

Further, as a result of various tests, the preset inventors found that, in a plurality of hydraulic machines connected to a hydraulic line in parallel, there is a correlation between a rotational phase difference of the plurality of hydraulic machines and pulsation of the hydraulic line. Specifically, in a case where non-active working chambers are arranged identically among a plurality of hydraulic machines, the pressure pulsation increases or decreases depending on the rotational phase difference of the plurality of hydraulic chambers.

The present inventors conducted further researches based on the above findings to arrive at the present invention.
(1) A hydraulic system according to at least one embodiment of the present invention includes a hydraulic line and a plurality of hydraulic machines connected to the hydraulic line in parallel. Each of the hydraulic machines includes: a rotation shaft; a plurality of pistons configured to reciprocate in accordance with the rotation shaft; and a plurality of cylinders which forms a plurality of working chambers with the plurality of pistons.
   The hydraulic system is configured to operate the plurality of hydraulic machines in an operation pattern in which there is a rotational phase difference among the hydraulic machines, the rotational phase difference being determined in accordance with an arrangement of one or more target working chambers which are in a non-active state among the plurality of working chambers.
   According to the above findings, it is desirable to operate the hydraulic machines in a range where the pulsation of the hydraulic line is low in order to reduce vibration of the hydraulic machine, and it can be seen that the range where pulsation of the hydraulic line is low can be achieved by selection of a rotational phase difference of the plurality of hydraulic machines.
   In view of this, in the above configuration (1), the plurality of hydraulic machines is operated in the operation pattern in which the plurality of hydraulic machines has a rotational phase difference, which makes it possible to restrict pulsation of the hydraulic line, and thus to reduce vibration due to rotation of the hydraulic machine. Further, it is possible to reduce vibration by appropriately selecting an operation pattern of the hydraulic machine. Thus, it is unnecessary to additionally provide a component for addressing vibration, and it is also unnecessary to modify the design of the hydraulic machine, for instance, which makes it possible to provide a simplified vibration reduction measure. Here, the target working chambers may be abnormal working chambers in which trouble has occurred to the pistons, or high pressure valves or low pressure valves that correspond to the pistons for instance, and in which functional failure has occurred.
(2) In some embodiments, in the above configuration (1), the operation pattern is an optimum operation pattern in which a vibration level of the hydraulic machines is a minimum when the target working chambers are arranged in the arrangement, among a plurality of operation patterns among which the rotational phase difference of the hydraulic machines is varied.
   With the above configuration (2), from among the plurality of operation patterns among which the rotational phase difference of the hydraulic machines is varied, the optimum operation pattern which realizes the minimum vibration level of the hydraulic machines in a case where the target working chambers are in the above arrangement is selected so that the hydraulic machines are operated by the selected operation pattern, which makes it possible to reduce vibration caused by rotation of the hydraulic machines effectively.
(3) In some embodiments, in the above configuration (2), the optimum operation pattern is determined from the arrangement of the target working chambers, based on a known correlation between the vibration level of the hydraulic machines and an arrangement of one or more non-active working chambers which do not convert energy between rotation energy of the rotation shaft and pressure energy in the working chambers.
   In the above configuration (3), a correlation between an arrangement of one or more non-active working chambers and a vibration level of the hydraulic machines is obtained in advance, and the hydraulic machines are operated in the optimum operation pattern determined from the arrangement of the target working chambers based on the above correlation. In this way, it is possible to suitably select an operation pattern whereby it is possible to reduce vibration, and to reduce vibration caused by rotation of the hydraulic machines effectively.
(4) In some embodiments, in the above configuration (2) or (3), each of the hydraulic machines includes: a state-switching unit for switching a state of each of the working chambers between an active state in which energy is converted between the rotation energy of the rotation shaft and the pressure energy in the working chambers, and a non-active state in which the energy is not converted; and a controller for controlling the state-switching unit.
   The controller is configured to maintain one or more non-active working chambers which are not the target working chambers in the non-active state, in addition to the target working chambers, so that the vibration level is further reduced.
   With the above configuration (4), the state-switching unit (for instance, high pressure valves and low pressure valves) is controlled by the controller so as to maintain one or more non-active working chambers which are not the target working chambers in the non-active state, in addition to the target working chambers, so that the vibration level is reduced even further. Thus, it is possible to further reduce vibration due to rotation of the hydraulic machines.
(5) In one embodiment, in the above configuration (4), the controller is configured to select the non-active working chambers which are to be maintained in the non-active state in addition to the target working chambers, based on the known correlation between the vibration level of the hydraulic machines and the arrangement of the non-active working chambers.
   With the above configuration (5), a correlation between an arrangement of one or more non-active working chambers and a vibration level of the hydraulic machines is obtained in advance, and non-active working chambers which are to be maintained in the non-active state are selected in addition to the target working chambers based on the correlation, which makes it possible to appropriately select a state-switching unit that is to be controlled to further reduce vibration caused by rotation of the hydraulic machines.
(6) In one embodiment, in the above configuration (4) or (5), the controller is configured to select the non-active working chambers from the working chambers other than the target working chambers so that the vibration level is reduced, and to maintain the non-active working chambers in the non-active state in addition to the target working chambers, in a case where the vibration level predicted under an operation condition of the hydraulic machines operated in the optimum operation pattern is greater than a predetermined value.
   With the above configuration (6), in a case where the vibration level still exceeds the predetermined value even though the optimum operation pattern is selected, other non-active working chambers are maintained to be non-active in addition to the target working chambers, which makes it possible to securely reduce vibration caused by rotation of the hydraulic machines.
(7) In one embodiment, in the above configuration (6), the controller is configured to maintain the non-active working chambers in the non-active state in addition to the target working chambers, and an operation pattern for the hydraulic machines is reselected from the plurality of operation patterns among which the rotational phase difference of the hydraulic machines is varied, so that the vibration level falls within a range not greater than the predetermined value.
   With the above configuration (7), in a case where the vibration level still exceeds the predetermined value even though the optimum operation pattern is selected, other non-active working chambers are maintained in the non-active state in addition to the target working chambers and an operation pattern is reselected, which makes it possible to securely reduce vibration caused by rotation of the hydraulic machines.
(8) In some embodiments, in the configuration described in the above (1) to (7), each of the hydraulic machines is driven by pressurized oil in the hydraulic line to input mechanical energy into a generator, and the operation pattern is selected from a plurality of operation patterns which is selectable in accordance with the number of poles of each generator.
   Normally, in a case where a plurality of generators is connected to a utility grid, the plurality of hydraulic machines coupled to the respective generators is operated at a rotational phase difference corresponding to the number of poles of the generators. With the above configuration (8), the hydraulic machines are operated in the operation pattern selected from the plurality of operation patterns which can be selected in accordance with the number of poles of the generators. Thus, it is possible to reduce vibration due to rotation of the hydraulic machines without interrupting operation of the generators.
(9) A renewable energy power generating apparatus according to at least one embodiment of the present invention includes: a rotor configured to be rotatable by renewable energy; a hydraulic pump configured to generate pressurized oil by being driven by the rotor; a plurality of hydraulic motors configured to be driven by the pressurized oil; and a plurality of generators configured to be driven by the respective hydraulic motors. Each of the hydraulic motors is one of the hydraulic machines in the hydraulic system according to any one of the above (1) to (8).
   With the above configuration (9), it is possible to reduce vibration due to rotation of the hydraulic machines, which makes it possible to provide a renewable energy power generating apparatus in which failure due to vibration is unlikely to occur and which can be operated smoothly.
(10) A method of operating a hydraulic system according to at least one embodiment of the present invention is for a hydraulic system including: a hydraulic line; and a plurality of hydraulic machines connected to the hydraulic line in parallel. Each of the hydraulic machines includes: a rotation shaft; a plurality of pistons configured to reciprocate in accordance with the rotation shaft; and a plurality of cylinders which forms a plurality of working chambers with the plurality of pistons. The method includes the step of operating the plurality of hydraulic machines in an operation pattern in which there is a rotational phase difference among the hydraulic machines, the rotational phase difference being determined in accordance with an arrangement of one or more target working chambers in which functional failure has occurred, among the plurality of working chambers.
   With the above method (10), the hydraulic machines are operated in an operation pattern in which there is a rotational phase difference between the hydraulic machines, which makes it possible to restrict pulsation of the hydraulic line, and thus to reduce vibration caused by rotation of the hydraulic machines. Further, since it is possible to reduce vibration by appropriately selecting the operation pattern of the hydraulic machines, it is unnecessary to provide an additional component for addressing vibration, and it is also unnecessary to modify the design of the hydraulic machines, for instance, which makes it possible to provide a simplified vibration reduction measure.
(11) A method of operating a renewable energy power generating apparatus according to at least one embodiment of the present invention is for a renewable energy power generating apparatus which includes: a rotor configured to be rotatable by renewable energy; a hydraulic pump configured to generate pressurized oil by being driven by the rotor; a plurality of hydraulic motors configured to be driven by the pressurized oil; a plurality of generators each of which is configured to be driven by corresponding one of the hydraulic motors; and a high-pressure line disposed between an outlet side of the hydraulic pump and an inlet side of each of the hydraulic motors.
   The plurality of hydraulic motors is connected to the high-pressure line in parallel. Each of the hydraulic motors includes: a rotation shaft; a plurality of pistons configured to reciprocate in accordance with the rotation shaft; and a plurality of cylinders which forms a plurality of working chambers with the plurality of piston.
   The method includes the step of operating the plurality of hydraulic motors in an operation pattern in which there is a rotational phase difference among the hydraulic motors, the rotational phase difference being determined in accordance with an arrangement of one or more target working chambers in which functional failure has occurred among the plurality of working chambers.
   With the above method (11), the hydraulic motors are operated in an operation pattern in which there is a rotational phase difference among the hydraulic motors, which makes it possible to restrict pulsation of the hydraulic line, and thus to reduce vibration caused by rotation of the hydraulic motors. Further, since it is possible to reduce vibration by appropriately selecting the operation pattern of the hydraulic motors, it is unnecessary to provide an additional component for addressing vibration, and it is also unnecessary to modify the design of the hydraulic motors, which makes it possible to provide a simplified vibration reduction measure.
(12) In some embodiments, the above method (11) further includes the steps of: stopping operation of the renewable energy power generating apparatus if there are the one or more target working chambers during the operation of the renewable energy power generating apparatus, and a vibration level of the hydraulic pump or the hydraulic motors has exceeded a predetermined value; selecting an optimum operation pattern in which the vibration level reaches a minimum when the target working chambers are arranged in the arrangement, from among a plurality of operation patterns among which the rotational phase difference of the plurality of hydraulic motors is varied; and restarting the operation of the renewable energy power generating apparatus so that the plurality of hydraulic motors is operated in the optimum operation pattern.
   With the above method (12), from among the plurality of operation patterns among which the rotational phase difference of the hydraulic motors is varied, the optimum operation pattern which realizes the minimum vibration level of the hydraulic motors in a case where the target working chambers are in the above arrangement is selected, and the hydraulic motors are operated by the selected operation pattern, which makes it possible to reduce vibration caused by rotation of the hydraulic motors effectively.
(13) In some embodiments, the above method (12) further includes the step of selecting one or more non-active working chambers which are not the target working chambers in addition to the target working chambers so that the vibration level is further reduced, in a case where the vibration level is not predicted to fall to the predetermined value or less even though the optimum operation pattern is selected. In the step of restarting the operation of the renewable energy power generating apparatus, the target working chambers and the one or more non-active working chambers are operated in a non-active state in which energy is not converted between rotation energy of the rotation shaft and pressure energy in the working chambers, and working chambers other than the target working chambers and the one or more non-active working chambers are operated in an active state in which the energy is converted..
   With the above configuration (13), in a case where the vibration level is still high even though the optimum operation pattern is selected, one or more non-active working chambers other than the target working chambers are selected, which makes it possible to reduce vibration caused by rotation of the hydraulic motors even further.
(14) In one embodiment, the above method (13) further includes the step of reselecting an optimum operation pattern for the hydraulic motors from the plurality of operation patterns among which the rotational phase difference of the hydraulic motors is varied so that the vibration level is further reduced, in a case where the vibration level is not predicted to fall to the predetermined value or less even though the optimum operation pattern is selected.
   With the above method (14), in a case where the vibration level is still high even though the optimum operation pattern is selected, one or more non-active working chambers other than the target working chambers are selected and an operation pattern of the hydraulic motors is reselected, which makes it possible to securely reduce vibration caused by rotation of the hydraulic motors.
(15) In some embodiments, in the above methods (12) to (14), in the step of selecting the optimum operation pattern, the optimum operation pattern is selected so that the vibration level is the minimum at a reference output of the renewable energy power generating apparatus determined in accordance with an amount of the renewable energy which appears most frequently.
   With the method (15), the optimum pattern which realizes the minimum vibration level at the reference output of the wind turbine power generating apparatus is estimated upon selection of the optimum operation pattern. Thus, it is possible to select the appropriate optimum operation pattern whereby it is possible to reduce vibration caused by rotation of the hydraulic motor effectively.

According to at least one embodiment of the present invention, the plurality of hydraulic machines is operated in an operation pattern in which there is a rotational phase difference among the hydraulic machines, which makes it possible to restrict pulsation of the hydraulic line, and thus to reduce vibration caused by rotation of the hydraulic machines. Further, since it is possible to reduce vibration by appropriately selecting the operation pattern of the hydraulic machines, it is unnecessary to provide an additional component for the purpose of addressing vibration, and it is also unnecessary to modify the design of the hydraulic machines, which makes it possible to provide a simplified vibration reduction measure.

### BRIEF DESCRIPTION OF DRAWINGS

FIG. 1 is a configuration diagram of a wind turbine power generation apparatus according to some embodiments.
FIG. 2 is a cross-sectional view perpendicular to a rotation axis O of a hydraulic motor according to one embodiment.
FIG. 3 is a cross-sectional view along a rotation axis O of the hydraulic motor according to one embodiment.
FIG. 4A is a graph indicating a relationship between pulsation and velocity of a 2N component of a frequency of hydraulic motors. FIG. 4B is a graph indicating a relationship between pressure pulsation of a 2N component and the speed of the entire frequency, of the frequency of hydraulic motors.
FIGs. 5A to 5D are each a graph of a correlation between a rotational phase difference of hydraulic motors and pressure pulsation of a 2N component.
FIG. 6 is a graph indicating a relationship between a vibration level and a pulsation level of hydraulic motors.
FIG. 7 is a flowchart illustrating an operation method according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

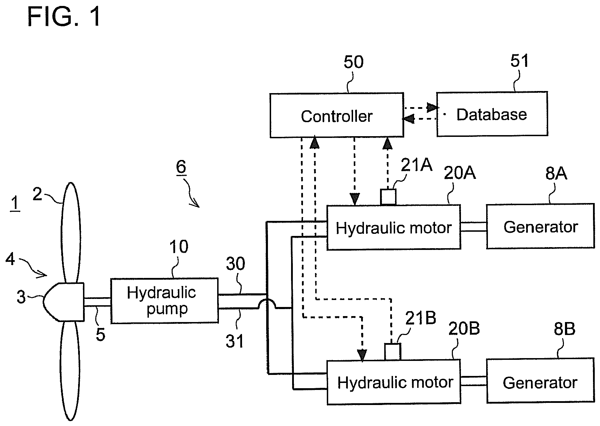

First, with reference to FIG. 1, a wind turbine power generating apparatus 1 will be described as a renewable energy power generating apparatus to which the present embodiment is applied. Here, FIG. 1 is a schematic configuration diagram of a wind turbine power generating apparatus according to some embodiments. However, the renewable energy power generating apparatus according to the present embodiment may be applied to other renewable energy power generating apparatuses such as a tidal current power generating apparatus, an ocean current power generating apparatus, and a river current power generating apparatus.

As illustrated in FIG. 1, the wind turbine power generating apparatus 1 according to some embodiments includes a rotor 4 including at least one blade 2 and a hub 3, a rotation shaft 5 which rotates with the rotor 4, a hydraulic transmission 6 which accelerates rotation of the rotor 4, and generators 8 (8A, 8B) into which rotation energy of the rotor 4 is inputted via the hydraulic transmission 6.

The rotor 4 is configured such that the at least one blade 2 is attached to the hub 3, and the blade 2 rotates with the hub 3 by receiving wind. The rotation shaft 5 is coupled to the hub 3. The entire rotor 4 is rotated by the wind force received by the blade 2, and the rotation is inputted into the hydraulic transmission 6 via the rotation shaft 5.

The hydraulic transmission 6 includes a hydraulic pump 10, a plurality of hydraulic motors 20 (20A, 20B), and hydraulic lines including a high pressure line 30 and a low pressure line 31.

The hydraulic pump 10 is configured to be driven by mechanical rotational energy inputted into the rotation shaft 5.

A plurality of hydraulic motors 20 (20A, 20B) is each connected to the hydraulic lines in parallel. While two hydraulic motors 20A, 20B are illustrated in the drawing, the number of hydraulic motors 20 is not limited to two, and may be three or more. Each hydraulic motor 20A, 20B is configured to be driven by pressurized oil (high pressure oil) from the hydraulic pump 10. The generators 8A, 8B connected to a utility grid are coupled to the rotation shafts (output shafts) 22A, 22B of the hydraulic motors 20A, 20B.

The high pressure line 30 is disposed between an outlet of the hydraulic pump 10 and inlets of the hydraulic motors 20A, 20B, and configured to guide high pressure oil generated by the hydraulic pump 10 to the hydraulic motors 20A, 20B.

The low pressure line 31 is disposed between outlets of the hydraulic motors 20A, 20B and an inlet of the hydraulic pump 10, and configured to guide working oil (low pressure oil) discharged from the hydraulic motors 20A, 20B into the hydraulic pump 10.

In the above hydraulic transmission 6, the high pressure oil generated in the hydraulic pump 10 flows into the hydraulic motors 20A, 20B via the high pressure line 30 to drive the hydraulic motors 20. The low pressure oil having performed work in the hydraulic motors 20 flows into the hydraulic pump 10 via the low pressure line 31, has its pressure increased by the hydraulic pump 10, and again flows into the hydraulic motors 20 via the high pressure line 30. Then, the rotation inputted into the hydraulic pump 10 of the hydraulic transmission 6 is accelerated by the hydraulic transmission 6, and then inputted into the generators 8 (8A, 8B).

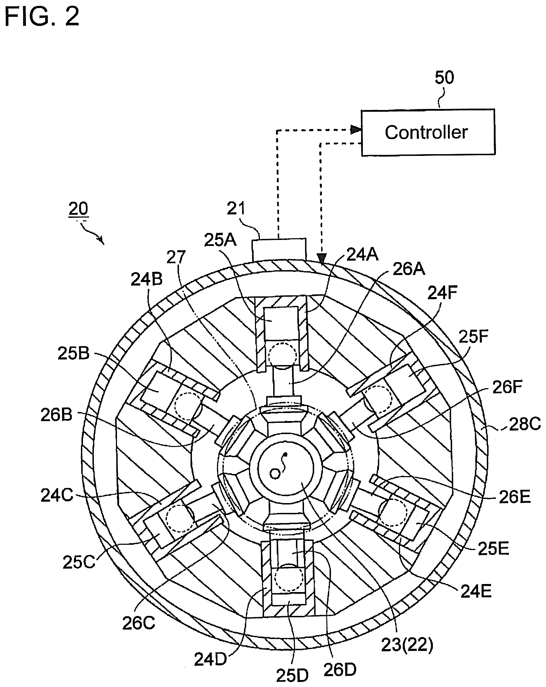

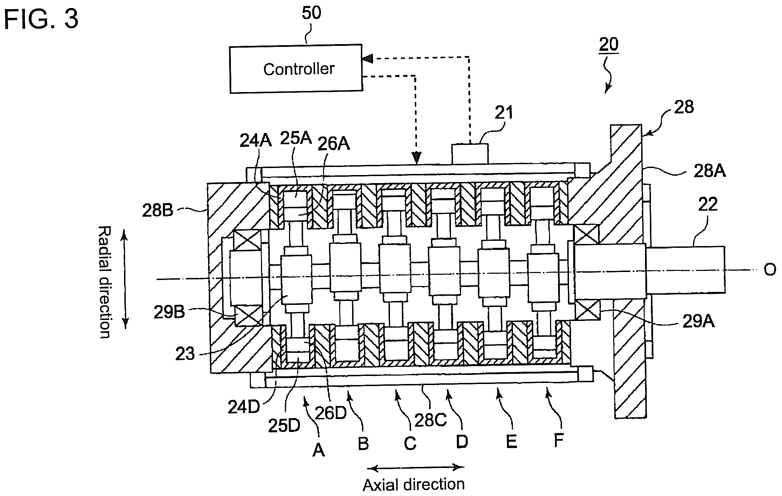

Here, as an example of the hydraulic machine according to the present embodiment, each hydraulic motor 20 (20A, 20B) illustrated in FIGs. 2 and 3 will be described in detail. FIG. 2 is a cross-sectional view perpendicular to a rotation axis O of the hydraulic motor 20 according to one embodiment. FIG. 3 is a cross-sectional view along the rotation axis O of the hydraulic motor 20 according to one embodiment. Here, the rotation axis O is a rotational axis of the rotation shaft 22.

As illustrated in FIGs. 2 and 3, each hydraulic motor 20 according to one embodiment includes an eccentric cam 23 that rotates with the rotation shaft 22, a plurality of pistons 26 (26A to 26F), and a plurality of cylinders 24 (24A to 24F). Each piston 26 and corresponding one of the cylinders 24 form a working chamber 25 (25A to 25F). The high pressure line 30 and the low pressure line 31 (see FIG. 1) are connected to each of the working chambers 25, so that supply and discharge of working oil, which is a working fluid, is performed via a valve mechanism (not illustrated).

The plurality of pistons 26 and the plurality of cylinders 24 are each arranged radially around the eccentric cam 23. The plurality of pistons 26 is caused to reciprocate at phases varied among one another by the working oil in the working chambers 25 and the eccentric cam 23. That is, when each piston 26 moves from a top dead center toward a bottom dead center (motoring stroke), working oil introduced into the working chambers 25 from the high pressure line 30 (see FIG. 1) pushes down the pistons 26 toward the eccentric cam 23 along the cylinder axes. At this time, the eccentric cam 23 is pressed by the pistons 26, and thereby the eccentric cam 23 rotates. When the eccentric cam 23 rotates, the pistons 26 positioned in the vicinity of the bottom dead centers are pushed up by the eccentric cam 23, so that the working oil in the working chambers 25 is discharged into the low pressure line 31 (see FIG. 1).

Such cyclic reciprocating motion of the pistons 26 rotates the rotation shaft 22 coupled to the eccentric cam 23.

The rotation shaft 22 may be connected to the generators 8 (8A, 8B) illustrated in FIG. 1, for instance, and configured to transmit rotational motion of the rotation shaft 22 to the generators to drive the generators 8 (8A, 8B).

As illustrated in FIGs. 2 and 3, for instance, a casing 28 includes end plates 28A, 28B arranged on opposite ends of the hydraulic motor 20 in the axial direction, and a tubular case 28C disposed between the end plates 28A, 28B. Vibration of the rotation shaft 22 transmits to the casing 28 via bearings 29A, 29B that support the rotation shaft 22.

Here, as illustrated in FIG. 3, the hydraulic motor 20 may include the eccentric cam 23 and a plurality of banks A to F. Each bank includes the plurality of piston 26 (26A to 26F), the plurality of cylinders 24 (24A to 24F) and the plurality of working chambers 25 (25A to 25F) corresponding to the eccentric cam 23.

The above hydraulic motor 20 includes high pressure valves and low pressure valves which are disposed on the respective working chambers 25 (25A to 25F) as a valve mechanism. Each high pressure valve is disposed between the corresponding working chamber 25 (25A to 25F) and the high pressure line 30, while each low pressure valve is disposed between the corresponding working chamber 25 (25A to 25F) and the low pressure line 31.

In the hydraulic motor 20, it is possible to switch the state of each working chamber 25 (25A to 25F) between an active state and a non-active state by opening and closing the high pressure valves and low pressure valves. When the working chamber 25 (25A to 25F) is active, the high pressure valve is open and the low pressure valve is closed during a motor stroke so as to let pressurized oil flow into the working chamber 25 (25A to 25F) from the high pressure line 30, while the high pressure valve is closed and the low pressure valve is open during a discharge stroke so as to feed the pressurized oil having performed work in the working chamber 25 (25A to 25F) to the low pressure line 31. On the other hand, when the working chamber 25 (25A to 25F) is in the non-active state, a state in which the high pressure valve is closed and the low pressure valve is open is maintained, so that the pressurized oil reciprocates between the working chamber 25 (25A to 25F) and the low pressure line 31 (that is, the high pressure oil from the high pressure line 30 is not accepted into the working chamber 25 (25A to 25F)).

With regard to the hydraulic motors 20 having the above configuration, vibration may be caused by rotation of the hydraulic motors 20.

The present inventors found that, as a result of intensive researches for reducing vibration caused by rotation of the hydraulic motors 20 (20A, 20B), there is a correlation between vibration of the hydraulic motors 20A, 20B and a rotational phase difference between the hydraulic motors 20A, 20B, in a hydraulic system in which the plurality of hydraulic motors 20A, 20B is connected to the hydraulic lines (the high pressure line 30 and the low pressure line 31) in parallel.

First, the present inventors found that vibration of the hydraulic motors 20 (20A, 20B) is correlated to pulsation of the high pressure line 30.

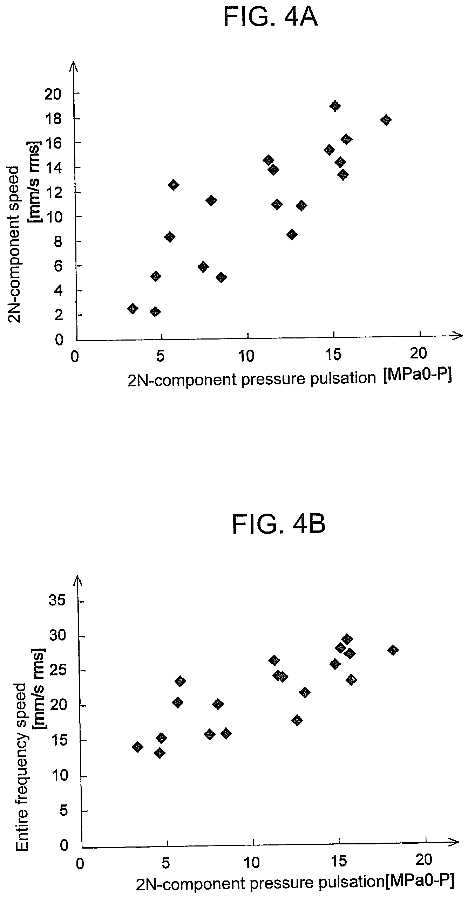

FIG. 4A is a graph indicating a relationship of pressure pulsation and speed of a 2N component of a frequency of the hydraulic motors 20 (20A, 20B). FIG. 4B is a graph indicating a relationship between pressure pulsation of a 2N component and speed of the entire frequency, of the frequency of the hydraulic motors 20 (20A, 20B). In the drawings, the pressure pulsation or the speed of the 2N component is extracted by conducting frequency analysis by FFT on time-series data obtained by adding up in-cylinder pressures of the plurality of cylinders 24 (24A to 24F). Here, the speed is used as a parameter indicating vibration.

As illustrated in FIGs. 4A and 4B, the speed of the 2N component and the speed of the entire frequency tend to increase in accordance with the pressure pulsation, and the increasing trend is substantially similar between the speed of the 2N component and the speed of the entire frequency. Therefore, it can be seen that vibration of the 2N component has a great influence on vibration of the hydraulic motors 20 (20A, 20B), and that it is important to restrict pressure pulsation of the high pressure line 30 to reduce vibration of the 2N component.

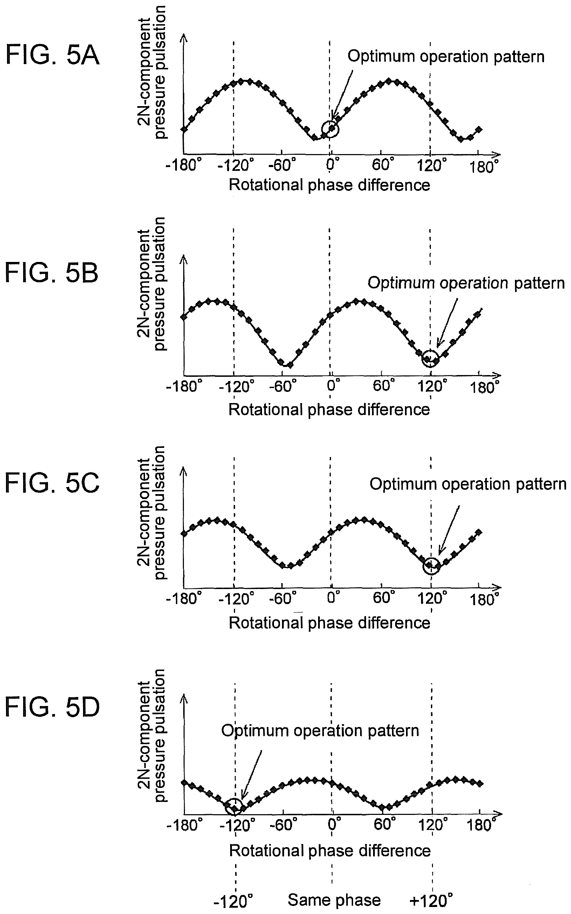

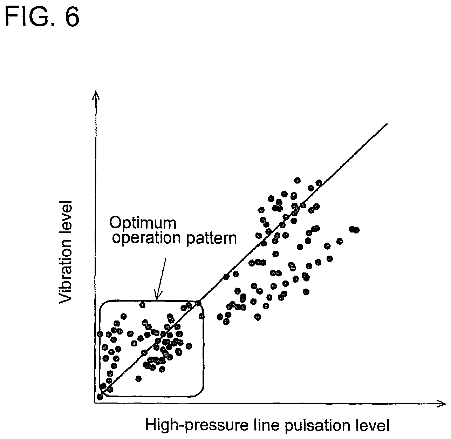

FIGs. 5A to 5D are each a graph of a relationship between a rotational phase difference of the hydraulic motors 20 (20A, 20B) and pressure pulsation of the 2N component. FIG. 6 is a graph indicating a relationship between a vibration level and a pulsation level of the hydraulic motors 20 (20A, 20B). FIGs. 5A to 5D illustrate a plurality of relationships under different conditions.

Here, a rotational phase difference refers to a relative difference in rotation angles between an arrangement of non-active target working chambers in one hydraulic motor 20A and an arrangement of non-active target working chambers in another hydraulic motor 20B. Normally, non-active target working chambers among the plurality of working chambers 25 (25A to 25F) have the same arrangement between one hydraulic motor 20A and the other hydraulic motor 20B. Here, the hydraulic motors 20A, 20B are operated so that the arrangement of non-active target working chambers in one hydraulic motor 20A and the arrangement of the non-active target working chambers in the other hydraulic motor 20B have a constant rotational phase difference between minus180° and plus 180°. For instance, in a case where the hydraulic motors 20 (20A, 20B) are directly connected to six-pole generators 8 (8A, 8B) connected to a utility grid, the rotational phase difference between one hydraulic motor 20A and the other hydraulic motor 20B is selected from three operation patterns of minus 120°, 0°, and plus 120°.

From the graphs illustrated in FIGs. 5A to 5D, it can be seen that the pressure pulsation of the 2N component is varied in accordance with the rotational phase difference between the two hydraulic motors 20A, 20B. For instance, in the example illustrated in FIG. 5B, when the operation pattern is one with the rotational phase difference of 120° of the above three operation patterns, the pressure pulsation of the 2N component is small. That is, it can be seen that the pressure pulsation increases and decreases depending on the rotational phase difference between one hydraulic motor 20A and the other hydraulic motor 20B in a case where the arrangement of the non-active target working chambers is the same in the hydraulic motor 20A and the hydraulic motor 20B. Further, from the graph illustrated in FIG. 6, it can be seen that the vibration level increases with an increase in the pulsation level of the high pressure line 30.

Thus, to reduce the vibration level of the hydraulic motors 20 (20A, 20B), it is desirable to operate the hydraulic motors 20 in a range where the pulsation of the high pressure line 30 is small. It can be seen that a range with small pulsation of the high pressure line 30 can be achieved by selection of a rotational phase difference between the two hydraulic motors 20A, 20B.

In this regard, the following embodiments are proposed to reduce vibration of the hydraulic motors 20 (20A, 20B).

With reference to FIGs. 1 to 3, in some embodiments, a plurality of hydraulic motors 20A, 20B is configured to be operated in an operation pattern in which there is a rotational phase difference between the hydraulic motors 20A, 20B. The rotational phase difference is determined in accordance with arrangements of one ore more non-active target working chambers of the plurality of working chambers 25 (25A to 25F).

With the above configuration, the plurality of hydraulic motors 20A, 20B is operated in an operation pattern in which there is a rotational phase difference between the hydraulic motors 20A, 20B, which makes it possible to restrict pulsation of the high pressure line 30, and thus to reduce vibration caused by rotation of the hydraulic motors 20A, 20B. Further, since it is possible to reduce vibration by appropriately selecting an operation pattern for the plurality of hydraulic motors 20A, 20B, it is unnecessary to provide an additional component for addressing vibration, and it is also unnecessary to modify the design of the hydraulic motors 20A, 20B, which makes it possible to provide a simplified vibration reduction measure.

In this case, the operation pattern selected for the hydraulic motors 20A, 20B may be an optimum operation pattern of a plurality of operation patterns among which the rotational phase difference between the hydraulic motors 20A, 20B is varied, the optimum operation pattern realizing the minimum vibration level of the hydraulic motors 20A, 20B in a case where the target working chambers are in the above arrangement. Specifically, the optimum operation pattern which realizes the minimum vibration level of the hydraulic motors 20A, 20B in a case where the target working chambers are in the above arrangement is selected from the plurality of operation patterns among which the rotational phase difference of the hydraulic motors 20A, 20B is varied, and the hydraulic motors 20A, 20B are operated in the selected operation pattern, which makes it possible to effectively reduce vibration caused by rotation of the hydraulic motors 20A, 20B.

Further, in a case where the hydraulic motors 20A, 20B are respectively coupled to the generators 8A, 8B as illustrated in FIG. 1, the operation pattern of the hydraulic motors 20A, 20B may be selected from a plurality of operation patterns that can be selected in accordance with the number of poles of the generators 8A, 8B.

Normally, in a case where a plurality of generators 8A, 8B is connected to the utility grid, the hydraulic motors 20A, 20B coupled to the respective generators 8A, 8B are operated at a rotational phase difference that corresponds to the number of poles of the generators 8A, 8B. In the above configuration, the hydraulic motors 20A, 20B are operated in an operation pattern selected from a plurality of operation patterns that can be selected in accordance with the number of poles of the generators 8A, 8B, which makes it possible to reduce vibration caused by rotation of the hydraulic motors 20A, 20B without interrupting operation of the generators 8A, 8B.

The hydraulic system according to one embodiment further includes a controller 50 and a database 51. Further, the hydraulic system may further include sensors 21 (21A, 21B).

Specifically, the controller 50 switches a state of each working chamber 25 (25A to 25F) in the plurality of hydraulic motors 20A, 20B between an active state and a non-active state by controlling a state-switching unit. Here, the state-switching unit is configured to switch a state of each working chamber 25 (25A to 25F) between an active state and a non-active state, and includes the above high pressure valves and the low pressure valves, for instance.

The database 51 stores a correlation between a vibration level of the hydraulic motors 20A, 20B and an arrangement of one ore more non-active working chambers that do not convert energy between rotational energy of the rotation shafts 22 (22A, 22B) and pressure energy in the working chambers.

The sensors 21 (21A, 21B) are configured to measure the vibration caused by rotation of the hydraulic motors 20A, 20B. As illustrated in the drawing, the sensors 21 (21A, 21B) may be attached to the casings 28 of the respective hydraulic motors 20A, 20B and configured to measure vibration of the hydraulic motors 20A, 20B. However, the configuration of each sensor 21 (21A, 21B) is not limited to the above configuration. The sensors 21 (21A, 21B) may be attached to other parts such as a casing of the hydraulic pump 10 or piping of the high pressure line 30 as long as they are configured to be capable of measuring vibration caused by rotation of the hydraulic motors 20A, 20B.

In one embodiment, the controller 50 is configured to select the optimum operation pattern in accordance with the arrangement of target working chambers based on the above correlation stored in the database 51.

As described above, a correlation between an arrangement of one ore more non-active working chambers and a vibration level of the hydraulic motors 20A, 20B is obtained in advance, and the hydraulic motors 20A, 20B are operated in the optimum operation pattern determined from the arrangement of the target working chambers based on the above correlation, which makes it possible to select a suitable operation pattern whereby it is possible to reduce vibration, and to effectively reduce vibration caused by rotation of the hydraulic motors 20A, 20B. Here, the target working chambers may be abnormal working chambers in which trouble has occurred to the pistons (26A to 26F), or the high pressure valves or low pressure valves corresponding to the pistons (26A to 26F), for instance, and in which functional failure has occurred.

Furthermore, the controller 50 may be configured to maintain one or more non-active working chambers which are not the target working chambers to be non-active, in addition to the target working chambers, so that the vibration level of vibration caused by the hydraulic motors 20A, 20B is further reduced. With this configuration, non-active working chambers which should be maintained to be non-active are selected in addition to the target working chambers based on the correlation, which makes it possible to appropriately select the state-switching units which need to be controlled to further reduce vibration caused by rotation of the hydraulic motors 20A, 20B.

Still further, the controller 50 may be configured to select a non-active working chamber from working chambers other than the target working chambers so that the vibration level is reduced, and to maintain the other non-active working chamber to be non-active in addition to the target working chambers in a case where a vibration level predicted under an operation condition for the hydraulic motors 20A, 20B operated in the optimum operation pattern exceeds a predetermined value. With this configuration, in a case in which the vibration level still exceeds the predetermined value even though the optimum operation pattern is selected, the other non-active working chamber is maintained to be non-active in addition to the target working chambers. Thus, it is possible to securely reduce vibration caused by rotation of the hydraulic motors 20A, 20B.

Alternatively, the controller 50 may be configured to maintain another non-active working chamber to be non-active in addition to the target working chambers and to reselect an operation pattern for the hydraulic motors 20A, 20B from the plurality of operation patterns among which the rotational phase difference of the hydraulic motors 20A, 20B is varied, so that the vibration level measured by the sensors 21 (21A, 21B) falls within a range not greater than the predetermined value. With this configuration, in a case where the vibration level still exceeds the predetermined value even though the optimum operation pattern is selected, the other non-active working chamber is maintained to be non-active in addition to the target working chambers and an operation pattern is reselected, which makes it possible to reduce vibration caused by rotation of the hydraulic motors 20A, 20B even more securely.

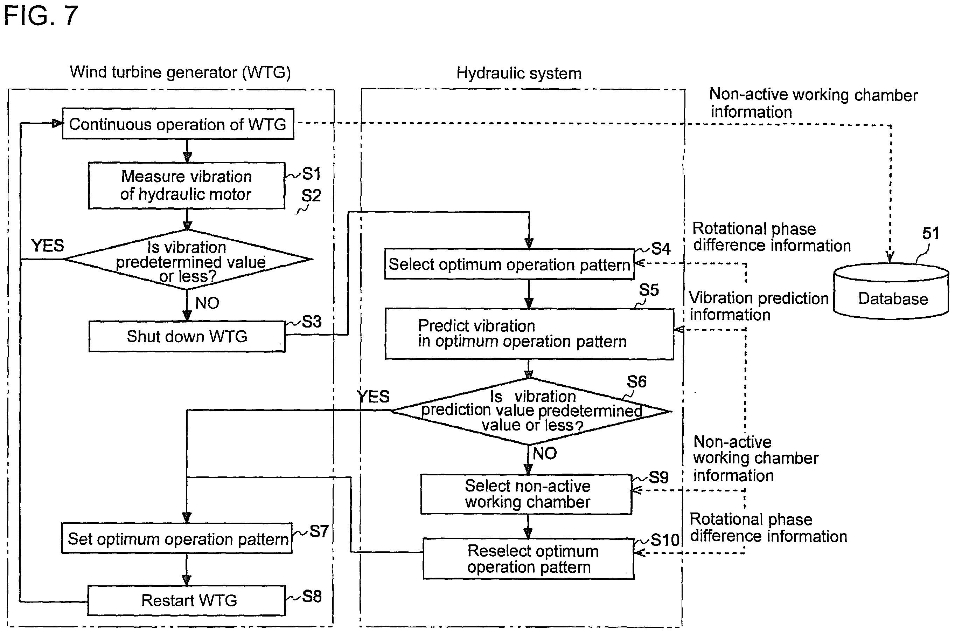

Next, with reference to FIG. 7, the method of operating the hydraulic motors 20A, 20B and the wind turbine power generating apparatus 1 according to one embodiment will be described. FIG. 7 is a flowchart illustrating an operation method according to one embodiment. Hereinafter, the same reference signs will be used where appropriate to represent the corresponding components illustrated in FIGs. 1 to 3.

During continuous operation of the wind turbine power generating apparatus 1, the vibration level may increase if there is a target working chamber which has become non-active due to occurrence of, for instance, functional failure, among the working chambers 25 (25A to 25F) of the hydraulic motors 20A, 20B. Thus, in step S1, vibration of the hydraulic motors 20A, 20B during continuous operation of the wind turbine power generating apparatus 1 is measured by the sensors 21 (21A, 21B). Here, information related to non-active working chambers may be accumulated in the database 51 during the continuous operation of the wind turbine power generating apparatus 1. In step S2, the controller 50 determines whether the vibration level of the vibration of the hydraulic motors 20A, 20B is not greater than a predetermined value, and if the vibration is not greater than the predetermined value, the current state is maintained and the operation is continued. On the other hand, if the vibration is greater than the predetermined value, operation of the wind turbine power generating apparatus 1 is stopped in step S3.

While operation the wind turbine power generating apparatus 1 is stopped in step S4, the controller 50 selects an optimum operation pattern which realizes the minimum vibration level of the hydraulic motors 20A, 20B, from a plurality of operation patterns among which the rotational phase difference of the hydraulic motors 20A, 20B is varied, based on a correlation between an arrangement of one or more non-active working chambers and a vibration level of the hydraulic motors 20A, 20B stored in the database 51. Then, in step S5, the controller 50 predicts vibration in the selected optimum operation pattern. In step S6, the controller 50 determines whether the vibration prediction value in the optimum operation pattern is not greater than a predetermined value. If the vibration prediction value is determined to be not greater than the predetermined value, the optimum operation pattern selected in step 4 is set in step S7, and then the wind turbine power generating apparatus 1 is restarted in step 8. Subsequently, upon operation of the wind turbine power generating apparatus 1, the hydraulic motors 20A, 20B are operated in the optimum operation pattern selected in step S4.

In contrast, if the vibration prediction value in the optimum operation pattern is determined to be greater than the predetermined value in step S6, in step 9, the controller 50 selects one or more non-active working chambers other than the target working chambers in addition to the target working chambers that are already non-active, based on the information related to non-active working chambers stored in the database 51, so that the vibration level is reduced even further. Then, in step S10, the controller 50 reselects an optimum operation pattern for an arrangement to which the selected one or more non-active working chambers are added. Specifically, the controller 50 selects an optimum operation pattern which realizes the minimum vibration level of the hydraulic motors 20A, 20B in a case where the target working chambers are in the above arrangement, from the plurality of operation patterns among which the rotational phase difference of the hydraulic motors 20A, 20B is varied, based on a correlation between the vibration level of the hydraulic motors 20A, 20B and the arrangement of one or more non-active working chambers stored in the database 51. Next, in step S7, the optimum operation pattern selected in step S10 is set, and then the wind turbine power generating apparatus 1 is restarted in step 8. Subsequently, upon operation of the wind turbine power generating apparatus 1, the hydraulic motors 20A, 20B are operated in the optimum operation pattern selected in step S10.

As described above, the hydraulic motors 20A, 20B are operated in an operation pattern in which the hydraulic motors 20A, 20B have a rotational phase difference, which makes it possible to restrict pulsation of the hydraulic line, and thus to reduce vibration caused by rotation of the hydraulic motors 20A, 20B. In this configuration, it is possible to reduce vibration by suitably selecting an operation pattern for the hydraulic motors 20A, 20B. Thus, it is unnecessary to provide an additional component for addressing vibration, and it is also unnecessary to modify the design of the hydraulic motors 20A, 20B for instance, which makes it possible to provide a simplified vibration reduction measure.

Further, an optimum operation pattern which realizes the minimum vibration level of the hydraulic motors 20A, 20B in a case where the target working chambers are in the above arrangement is selected from a plurality of operation patterns among which the rotational phase difference between the hydraulic motors 20A, 20B is varied, and the hydraulic motors 20A, 20B are operated in this selected pattern, which makes it possible to effectively reduce vibration caused by rotation of the hydraulic motors 20A, 20B.

Furthermore, in a case where the vibration level is still high even though the optimum operation pattern is employed, one or more non-active working chambers other than the target working chambers are selected, which makes it possible to further reduce vibration caused by rotation of the hydraulic motors 20A, 20B.

Still further, in a case where the vibration level is still high even though the optimum operation pattern is employed, one or more non-active working chambers other than the target working chambers are selected and an operation pattern for the hydraulic motors 20A, 20B is reselected, which makes it possible to securely reduce vibration caused by rotation of the hydraulic motors 20A, 20B.

In the above method, in steps S4 and S10 of selecting an optimum operation pattern, an optimum operation pattern may be selected such that the vibration level reaches its minimum at a reference output of the wind turbine power generating apparatus 1 that is determined in accordance with the amount of wind energy (for instance, wind condition such as wind speed) that appears most frequently.

As described above, estimating an optimum pattern which realizes the minimum vibration level at a reference output of the wind turbine power generating apparatus 1 upon selection of an optimum operation pattern makes it possible to select a suitable optimum operation pattern whereby it is possible to effectively reduce vibration caused by rotation of the hydraulic motors 20A, 20B.

Embodiments of the present invention were described in detail above, but the present invention is not limited thereto, and various amendments and modifications may be implemented within a scope that does not depart from the present invention.

For instance, while the hydraulic pump 10 and the hydraulic motors 20 of the wind turbine power generating apparatus 1 are described as a hydraulic machine, the hydraulic machine of the present embodiment may be applied to a hydraulic machine of a renewable energy power generating apparatus other than the wind turbine power generating apparatus 1 or of other apparatuses using a hydraulic machine.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance.

For instance, an expression of an equal state such as "same" "equal" and "uniform" shall not be construed as indicating only the state in which the feature is strictly equal, but also includes a state in which there is a tolerance.

## Claims

1. A hydraulic system, comprising:
a hydraulic line; and
a plurality of hydraulic machines (20) connected to the hydraulic line in parallel,
wherein each of the hydraulic machines (20) includes:
a rotation shaft (22);
a plurality of pistons (26) configured to reciprocate in accordance with the rotation shaft (22); and
a plurality of cylinders (24) which forms a plurality of working chambers (25) with the plurality of pistons (26), and
**characterized in that** the hydraulic system is configured to operate the plurality of hydraulic machines (20) in an operation pattern in which there is a rotational phase difference among the hydraulic machines (20), the rotational phase difference being determined in accordance with an arrangement of one or more target working chambers (25) which are in a non-active state among the plurality of working chambers (25).

2. The hydraulic system according to claim 1, wherein the operation pattern is an optimum operation pattern in which a vibration level of the hydraulic machines (20) is a minimum when the target working chambers (25) are arranged in the arrangement, among a plurality of operation patterns among which the rotational phase difference of the hydraulic machines (20) is varied.

3. The hydraulic system according to claim 2,
wherein the optimum operation pattern is determined from the arrangement of the target working chambers (25), based on a known correlation between the vibration level of the hydraulic machines (20) and an arrangement of one or more non-active working chambers (25) which do not convert energy between rotation energy of the rotation shaft (22) and pressure energy in the working chambers (25).

4. The hydraulic system according to claim 2 or 3,
wherein each of the hydraulic machines (20) includes:
a state-switching unit for switching a state of each of the working chambers (25) between an active state in which energy is converted between the rotation energy of the rotation shaft (22) and the pressure energy in the working chambers (25), and a non-active state in which the energy is not converted; and
a controller (50) for controlling the state-switching unit, and
wherein the controller (50) is configured to maintain one or more non-active working chambers (25) which are not the target working chambers (25) in the non-active state, in addition to the target working chambers (25), so that the vibration level is further reduced.

5. The hydraulic system according to claim 4,
wherein the controller (50) is configured to select the non-active working chambers (25) which are to be maintained in the non-active state in addition to the target working chambers (25), based on the known correlation between the vibration level of the hydraulic machines (20) and the arrangement of the non-active working chambers (25).

6. The hydraulic system according to claim 4 or 5,
wherein the controller (50) is configured to select the non-active working chambers (25) from the working chambers (25) other than the target working chambers (25) so that the vibration level is reduced, and to maintain the non-active working chambers (25) in the non-active state in addition to the target working chambers (25), in a case where the vibration level predicted under an operation condition of the hydraulic machines (20) operated in the optimum operation pattern is greater than a predetermined value.

7. The hydraulic system according to claim 6,
wherein the controller (50) is configured to maintain the non-active working chambers (25) in the non-active state in addition to the target working chambers (25), and an operation pattern for the hydraulic machines (20) is reselected from the plurality of operation patterns among which the rotational phase difference of the hydraulic machines (20) is varied, so that the vibration level falls within a range not greater than the predetermined value.

8. The hydraulic system according to any one of claims 1 to 7,
wherein each of the hydraulic machines (20) is driven by pressurized oil in the hydraulic line to input mechanical energy into a generator (8), and
wherein the operation pattern is selected from a plurality of operation patterns which is selectable in accordance with the number of poles of each generator (8).

9. A renewable energy power generating apparatus (1), comprising:
a rotor (4) configured to be rotatable by renewable energy;
a hydraulic pump (10) configured to generate pressurized oil by being driven by the rotor (4);
a plurality of hydraulic motors (20) configured to be driven by the pressurized oil; and
a plurality of generators (8) configured to be driven by the respective hydraulic motors (20),
wherein each of the hydraulic motors (20) is one of the hydraulic machines (20) in the hydraulic system according to any one of claims 1 to 8.

10. A method of operating a hydraulic system which includes: a hydraulic line; and a plurality of hydraulic machines (20) connected to the hydraulic line in parallel, each of the hydraulic machines (20) including: a rotation shaft (22); a plurality of pistons (26) configured to reciprocate in accordance with the rotation shaft (22); and a plurality of cylinders (24) which forms a plurality of working chambers (25) with the plurality of pistons (26), the method being **characterized in that** it comprises the step of
operating the plurality of hydraulic machines (20) in an operation pattern in which there is a rotational phase difference among the hydraulic machines (20), the rotational phase difference being determined in accordance with an arrangement of one or more target working chambers (25) in which functional failure has occurred, among the plurality of working chambers (25).

11. A method of operating a renewable energy power generating apparatus (1) which includes: a rotor (4) configured to be rotatable by renewable energy; a hydraulic pump (10) configured to generate pressurized oil by being driven by the rotor (4); a plurality of hydraulic motors (20) configured to be driven by the pressurized oil; a plurality of generators (8) each of which is configured to be driven by corresponding one of the hydraulic motors (20); and a high-pressure line (30) disposed between an outlet side of the hydraulic pump (10) and an inlet side of each of the hydraulic motors (20), the plurality of hydraulic motors (20) being connected to the high-pressure line (30) in parallel and each including: a rotation shaft (22); a plurality of pistons (26) configured to reciprocate in accordance with the rotation shaft (22); and a plurality of cylinders (24) which forms a plurality of working chambers (25) with the plurality of pistons (26), the method comprising the step of
operating the plurality of hydraulic motors (20) in an operation pattern in which there is the rotational phase difference among the hydraulic motors (20), according to the method as defined in claim 10.

12. The method of operating a renewable energy power generating apparatus (1) according to claim 11, further comprising the steps of:
stopping operation of the renewable energy power generating apparatus if there are the one or more target working chambers (25) during the operation of the renewable energy power generating apparatus, and a vibration level of the hydraulic pump (10) or the hydraulic motors (20) has exceeded a predetermined value;
selecting an optimum operation pattern in which the vibration level reaches a minimum when the target working chambers (25) are arranged in the arrangement, from among a plurality of operation patterns among which the rotational phase difference of the plurality of hydraulic motors (20) is varied; and
restarting the operation of the renewable energy power generating apparatus so that the plurality of hydraulic motors (20) is operated in the optimum operation pattern.

13. The method of operating a renewable energy power generating apparatus (1) according to claim 12, further comprising the step of
selecting one or more non-active working chambers (25) which are not the target working chambers (25) in addition to the target working chambers (25) so that the vibration level is further reduced, in a case where the vibration level is not predicted to fall to the predetermined value or less even though the optimum operation pattern is selected,
wherein, in the step of restarting the operation of the renewable energy power generating apparatus, the target working chambers (25) and the one or more non-active working chambers (25) are operated in a non-active state in which energy is not converted between rotation energy of the rotation shaft (22) and pressure energy in the working chambers (25), and working chambers (25) other than the target working chambers (25) and the one or more non-active working chambers (25) are operated in an active state in which the energy is converted.

14. The method of operating a renewable energy power generating apparatus (1) according to claim 13, further comprising the step of
reselecting an optimum operation pattern for the hydraulic motors (20) from the plurality of operation patterns among which the rotational phase difference of the hydraulic motors (20) is varied so that the vibration level is further reduced, in a case where the vibration level is not predicted to fall to the predetermined value or less even though the optimum operation pattern is selected.

15. The method of operating a renewable energy power generating apparatus (1) according to any one of claims 12 to 14,
wherein, in the step of selecting the optimum operation pattern, the optimum operation pattern is selected so that the vibration level is the minimum at a reference output of the renewable energy power generating apparatus determined in accordance with an amount of the renewable energy which appears most frequently.

## Patentansprüche

1. Hydraulisches System, umfassend:
eine Hydraulikleitung und
mehrere hydraulische Maschinen (20), die mit der Hydraulikleitung parallel verbunden sind, wobei jede der hydraulischen Maschinen (20) enthält:
eine Drehwelle (22),
mehrere Kolben (26), die dafür konfiguriert sind, im Einklang mit der Drehwelle (22) eine Hin- und Herbewegung auszuführen, und
mehrere Zylinder (24), die mit den mehreren Kolben (26) mehrere Arbeitskammern (25) bilden, und
**dadurch gekennzeichnet, dass** das hydraulische System dafür konfiguriert ist, die mehreren hydraulischen Maschinen (20) in einem Betriebsmuster zu betreiben, in dem es eine Rotationsphasendifferenz zwischen den hydraulischen Maschinen (20) gibt, wobei die Rotationsphasendifferenz gemäß einer Anordnung einer oder mehrerer Ziel-Arbeitskammern (25), die sich in einem nicht-aktiven Zustand befinden, unter den mehreren Arbeitskammern (25) bestimmt wird.

2. Hydraulisches System nach Anspruch 1, wobei das Betriebsmuster ein optimales Betriebsmuster, bei dem ein Vibrationspegel der hydraulischen Maschinen (20) minimal ist, wenn die Ziel-Arbeitskammern (25) in der Anordnung angeordnet sind, unter mehreren Betriebsmustern ist, bei denen die Rotationsphasendifferenz der hydraulischen Maschinen (20) variiert wird.

3. Hydraulisches System nach Anspruch 2, wobei das optimale Betriebsmuster anhand der Anordnung der Ziel-Arbeitskammern (25) auf der Basis einer bekannten Korrelation zwischen dem Vibrationspegel der hydraulischen Maschinen (20) und einer Anordnung einer oder mehrerer nicht-aktiver Arbeitskammern (25), die keine Energie zwischen Rotationsenergie der Drehwelle (22) und Druckenergie in den Arbeitskammern (25) umwandeln, bestimmt wird.

4. Hydraulisches System nach Anspruch 2 oder 3,
wobei jede der hydraulischen Maschinen (20) enthält:
eine Zustandsumschalteinheit zum Umschalten eines Zustands einer jeden der Arbeitskammern (25) zwischen einem aktiven Zustand, in dem Energie zwischen der Rotationsenergie der Drehwelle (22) und der Druckenergie in den Arbeitskammern (25) umgewandelt wird, und einem nicht-aktiven Zustand, in dem die Energie nicht umgewandelt wird, und
eine Steuereinheit (50) zum Steuern der Zustandsumschalteinheit, und
wobei die Steuereinheit (50) dafür konfiguriert ist, eine oder mehrere nichtaktive Arbeitskammern (25), die keine Ziel-Arbeitskammern (25) sind, zusätzlich zu den Ziel-Arbeitskammern (25) in dem nicht-aktiven Zustand zu halten, so dass der Vibrationspegel weiter reduziert wird.

5. Hydraulisches System nach Anspruch 4, wobei die Steuereinheit (50) dafür konfiguriert ist, die nicht-aktiven Arbeitskammern (25), die zusätzlich zu den Ziel-Arbeitskammern (25) im nicht-aktiven Zustand gehalten werden sollen, auf der Basis der bekannten Korrelation zwischen dem Vibrationspegel der hydraulischen Maschinen (20) und der Anordnung der nicht-aktiven Arbeitskammern (25) auszuwählen.

6. Hydraulisches System nach Anspruch 4 oder 5, wobei die Steuereinheit (50) dafür konfiguriert ist, die nicht-aktiven Arbeitskammern (25) aus den Arbeitskammern (25), die keine Ziel-Arbeitskammern (25) sind, so auszuwählen, dass der Vibrationspegel reduziert wird, und die nicht-aktiven Arbeitskammern (25) zusätzlich zu den Ziel-Arbeitskammern (25) im nicht-aktiven Zustand zu halten, wenn der Vibrationspegel, der unter einer Betriebsbedingung der hydraulischen Maschinen (20), die in dem optimalen Betriebsmuster betrieben werden, prognostiziert wird, größer als ein zuvor festgelegter Wert ist.

7. Hydraulisches System nach Anspruch 6, wobei die Steuereinheit (50) dafür konfiguriert ist, die nicht-aktiven Arbeitskammern (25) zusätzlich zu den Ziel-Arbeitskammern (25) im nicht-aktiven Zustand zu halten, und ein Betriebsmuster für die hydraulischen Maschinen (20) erneut aus den mehreren Betriebsmustern, bei denen die Rotationsphasendifferenz der hydraulischen Maschinen (20) variiert wird, so ausgewählt wird, dass der Vibrationspegel in einen Bereich fällt, der nicht größer als der zuvor festgelegte Wert ist.

8. Hydraulisches System nach einem der Ansprüche 1 bis 7,
wobei jede der hydraulischen Maschinen (20) durch druckbeaufschlagtes Öl in der Hydraulikleitung angetrieben wird, um mechanische Energie an einen Generator (8) anzulegen, und
wobei das Betriebsmuster aus mehreren Betriebsmustern ausgewählt wird, die gemäß der Anzahl von Polen jedes Generators (8) auswählbar sind.

9. Mit erneuerbarer Energie arbeitende Stromerzeugungsvorrichtung (1), umfassend:
einen Rotor (4), der dafür konfiguriert ist, durch erneuerbare Energie in Drehung versetzt werden zu können,
eine Hydraulikpumpe (10), die dafür konfiguriert ist, druckbeaufschlagtes Öl zu erzeugen, indem sie durch den Rotor (4) angetrieben wird,
mehrere hydraulische Motoren (20), die dafür konfiguriert sind, durch das druckbeaufschlagte Öl angetrieben zu werden, und
mehrere Generatoren (8), die dafür konfiguriert sind, durch die jeweiligen hydraulischen Motoren (20) angetrieben zu werden,
wobei jeder der hydraulischen Motoren (20) eine der hydraulischen Maschinen (20) in dem hydraulischen System nach einem der Ansprüche 1 bis 8 ist.

10. Verfahren zum Betreiben eines hydraulischen Systems, das enthält: eine Hydraulikleitung, und mehrere hydraulische Maschinen (20), die mit der Hydraulikleitung parallel verbunden sind, wobei jede der hydraulischen Maschinen (20) enthält: eine Drehwelle (22), mehrere Kolben (26), die dafür konfiguriert sind, im Einklang mit der Drehwelle (22) eine Hin- und Herbewegung auszuführen, und mehrere Zylinder (24), die mit den mehreren Kolben (26) mehrere Arbeitskammern (25) bilden, wobei das Verfahren **dadurch gekennzeichnet ist, dass** es den Schritt umfasst:
Betreiben der mehreren hydraulischen Maschinen (20) in einem Betriebsmuster, in dem es eine Rotationsphasendifferenz zwischen den hydraulischen Maschinen (20) gibt, wobei die Rotationsphasendifferenz gemäß einer Anordnung einer oder mehrerer Ziel-Arbeitskammern (25), in denen es zu einem Funktionsausfall gekommen ist, unter den mehreren Arbeitskammern (25) bestimmt wird.

11. Verfahren zum Betreiben einer mit erneuerbarer Energie arbeitenden Stromerzeugungsvorrichtung (1), die enthält: einen Rotor (4), der dafür konfiguriert ist, durch erneuerbare Energie in Drehung versetzt werden zu können, eine Hydraulikpumpe (10), die dafür konfiguriert ist, druckbeaufschlagtes Öl zu erzeugen, indem sie durch den Rotor (4) angetrieben wird, mehrere hydraulische Motoren (20), die dafür konfiguriert sind, durch das druckbeaufschlagte Öl angetrieben zu werden, mehrere Generatoren (8), die jeweils dafür konfiguriert sind, durch einen jeweiligen der hydraulischen Motoren (20) angetrieben zu werden, und eine Hochdruckleitung (30), die zwischen einer Auslassseite der Hydraulikpumpe (10) und einer Einlassseite von jedem der hydraulischen Motoren (20) angeordnet ist, wobei die mehreren hydraulischen Motoren (20) mit der Hochdruckleitung (30) parallel verbunden sind und jeweils enthalten: eine Drehwelle (22), mehrere Kolben (26), die dafür konfiguriert sind, im Einklang mit der Drehwelle (22) eine Hin- und Herbewegung auszuführen, und mehrere Zylinder (24), die mit den mehreren Kolben (26) mehrere Arbeitskammern (25) bilden, wobei das Verfahren den Schritt umfasst:
Betreiben der mehreren hydraulischen Maschinen (20) in einem Betriebsmuster, in dem es die Rotationsphasendifferenz zwischen den hydraulischen Maschinen (20) gibt, gemäß dem Verfahren nach Anspruch 10.

12. Verfahren zum Betreiben einer mit erneuerbarer Energie arbeitenden Stromerzeugungsvorrichtung (1) nach Anspruch 11, das ferner die Schritte umfasst:
Stoppen des Betriebes der mit erneuerbarer Energie arbeitenden Stromerzeugungsvorrichtung, wenn es die eine oder die mehreren Ziel-Arbeitskammern (25) während des Betriebes der mit erneuerbarer Energie arbeitenden Stromerzeugungsvorrichtung gibt, und ein Vibrationspegel der Hydraulikpumpe (10) oder der hydraulischen Motoren (20) einen zuvor festgelegten Wert überschritten hat,
Auswählen eines optimalen Betriebsmusters, in dem der Vibrationspegel ein Minimum erreicht, wenn die Ziel-Arbeitskammern (25) in der Anordnung angeordnet sind, aus mehreren Betriebsmustern, bei denen die Rotationsphasendifferenz der mehreren hydraulischen Motoren (20) variiert wird, und
Neustarten des Betriebes der mit erneuerbarer Energie arbeitenden Stromerzeugungsvorrichtung so, dass die mehreren hydraulischen Motoren (20) in dem optimalen Betriebsmuster betrieben werden.

13. Verfahren zum Betreiben einer mit erneuerbarer Energie arbeitenden Stromerzeugungsvorrichtung (1) nach Anspruch 12, das ferner den Schritt umfasst:
Auswählen einer oder mehrerer nicht-aktiver Arbeitskammern (25), die nicht die Ziel-Arbeitskammern (25) sind, zusätzlich zu den Ziel-Arbeitskammern (25), dergestalt, dass der Vibrationspegel weiter reduziert wird, wenn nicht prognostiziert wird, dass der Vibrationspegel auf den zuvor festgelegten Wert oder weniger fällt, obgleich das optimale Betriebsmuster ausgewählt ist,
wobei, in dem Schritt des Neustartens des Betriebes der mit erneuerbarer Energie arbeitenden Stromerzeugungsvorrichtung, die Ziel-Arbeitskammern (25) und die eine oder die mehreren nicht-aktiven Arbeitskammern (25) in einem nicht-aktiven Zustand betrieben werden, in dem keine Energie zwischen Rotationsenergie der Drehwelle (22) und Druckenergie in den Arbeitskammern (25) umgewandelt wird, und andere Arbeitskammern (25) als die Ziel-Arbeitskammern (25) und die eine oder die mehreren nicht-aktiven Arbeitskammern (25) in einem aktiven Zustand betrieben werden, in dem die Energie umgewandelt wird.

14. Verfahren zum Betreiben einer mit erneuerbarer Energie arbeitenden Stromerzeugungsvorrichtung (1) nach Anspruch 13, das ferner den Schritt umfasst:
erneutes Auswählen eines optimalen Betriebsmusters für die hydraulischen Motoren (20) aus den mehreren Betriebsmustern, bei denen die Rotationsphasendifferenz der hydraulischen Motoren (20) variiert wird, dergestalt, dass der Vibrationspegel weiter reduziert wird, wenn nicht prognostiziert wird, dass der Vibrationspegel auf den zuvor festgelegten Wert oder weniger fällt, obgleich das optimale Betriebsmuster ausgewählt ist.

15. Verfahren zum Betreiben einer mit erneuerbarer Energie arbeitenden Stromerzeugungsvorrichtung (1) nach einem der Ansprüche 12 bis 14,
wobei, in dem Schritt des Auswählens des optimalen Betriebsmusters, das optimale Betriebsmuster so ausgewählt wird, dass der Vibrationspegel das Minimum bei einer Referenzausgangsleistung der mit erneuerbarer Energie arbeitenden Stromerzeugungsvorrichtung ist, die gemäß einem Betrag der erneuerbaren Energie bestimmt wird, der am häufigsten vorkommt.

## Revendications

1. Système hydraulique, comportant :
une ligne hydraulique ; et
une pluralité de machines hydrauliques (20) reliées en parallèle à la ligne hydraulique,
dans lequel chacune des machines hydrauliques (20) comprend :
un arbre de rotation (22) ;
une pluralité de pistons (26) configurés pour se déplacer en va-et-vient en fonction de l'arbre de rotation (22) ; et
une pluralité de cylindres (24) qui forme une pluralité de chambres de travail (25) avec la pluralité de pistons (26), et
**caractérisé en ce que** le système hydraulique est configuré pour faire fonctionner la pluralité de machines hydrauliques (20) dans un modèle de fonctionnement dans lequel il y a une différence de phase de rotation parmi les machines hydrauliques (20), la différence de phase de rotation étant déterminée en fonction d'un agencement d'une ou plusieurs chambres de travail cible (25) qui sont dans un état inactif parmi la pluralité de chambres de travail (25).

2. Système hydraulique selon la revendication 1, dans lequel le modèle de fonctionnement est un modèle de fonctionnement optimal dans lequel un niveau de vibration des machines hydrauliques (20) est un minimum quand les chambres de travail cible (25) sont disposées dans l'agencement, parmi une pluralité de modèles de fonctionnement parmi lesquels la différence de phase de rotation des machines hydrauliques (20) est modifiée.

3. Système hydraulique selon la revendication 2, dans lequel le modèle de fonctionnement optimal est déterminé à partir de l'agencement des chambres de travail cible (25), sur la base d'une corrélation connue entre le niveau de vibration des machines hydrauliques (20) et un agencement d'une ou plusieurs chambres de travail inactives (25) qui ne convertissent pas l'énergie entre une énergie de rotation de l'arbre de rotation (22) et une énergie de pression dans les chambres de travail (25).

4. Système hydraulique selon la revendication 2 ou 3, dans lequel chacune des machines hydrauliques (20) comprend :
une unité de commutation d'état destinée à commuter un état de chacune des chambres de travail (25) entre un état actif dans lequel de l'énergie est convertie entre l'énergie de rotation de l'arbre de rotation (22) et l'énergie de pression dans les chambres de travail (25), et un état inactif dans lequel l'énergie n'est pas convertie ; et
un dispositif de commande (50) destiné à commander l'unité de commutation d'état, et
dans lequel le dispositif de commande (50) est configuré pour maintenir une ou plusieurs chambres de travail inactives (25) qui ne sont pas les chambres de travail cible (25) dans l'état inactif, en plus des chambres de travail cible (25), de telle sorte que le niveau de vibration est encore réduit.

5. Système hydraulique selon la revendication 4, dans lequel le dispositif de commande (50) est configuré pour sélectionner les chambres de travail inactives (25) qui doivent être maintenues dans l'état inactif en plus des chambres de travail cible (25), sur la base de la corrélation connue entre le niveau de vibration des machines hydrauliques (20) et l'agencement des chambres de travail inactives (25).

6. Système hydraulique selon la revendication 4 ou 5, dans lequel le dispositif de commande (50) est configuré pour sélectionner les chambres de travail inactives (25) à partir des chambres de travail (25) autre que les chambres de travail cible (25) de telle sorte que le niveau de vibration est réduit, et pour maintenir les chambres de travail inactives (25) dans l'état inactif en plus des chambres de travail cible (25), dans un cas où le niveau de vibration prédit dans un état de fonctionnement des machines hydrauliques (20) actionnées dans le modèle de fonctionnement optimal est plus grand qu'une valeur prédéterminée.

7. Système hydraulique selon la revendication 6, dans lequel le dispositif de commande (50) est configuré pour maintenir les chambres de travail inactives (25) dans l'état inactif en plus des chambres de travail cible (25), et un modèle de fonctionnement pour les machines hydrauliques (20) est sélectionné de nouveau à partir de la pluralité de modèles de fonctionnement parmi lesquels la différence de phase de rotation des machines hydrauliques (20) est modifiée, de telle sorte que le niveau de vibration tombe dans une plage qui n'est pas plus grande que la valeur prédéterminée.

8. Système hydraulique selon l'une quelconque des revendications 1 à 7, dans lequel chacune des machines hydrauliques (20) est entraînée par de l'huile sous pression dans la ligne hydraulique pour entrer de l'énergie mécanique dans une génératrice (8), et
dans lequel le modèle de fonctionnement est sélectionné parmi une pluralité de modèles de fonctionnement qui peut être sélectionnée en fonction du nombre de pôles de chaque génératrice (8).

9. Appareil de génération d'énergie à énergie renouvelable (1), comportant :
un rotor (4) configuré pour être entraîné en rotation par de l'énergie renouvelable ;
une pompe hydraulique (10) configurée pour générer de l'huile sous pression en étant entraînée par le rotor (4) ;
une pluralité de moteurs hydrauliques (20) configurés pour être entraînés par l'huile sous pression ; et
une pluralité de génératrices (8) configurées pour être entraînées par les moteurs hydrauliques respectifs (20),
selon lequel chacun des moteurs hydrauliques (20) est l'une des machines hydrauliques (20) dans le système hydraulique selon l'une quelconque des revendications 1 à 8.

10. Procédé de fonctionnement d'un système hydraulique qui comprend : une ligne hydraulique ; et une pluralité de machines hydrauliques (20) reliées en parallèle à la ligne hydraulique, chacune des machines hydrauliques (20) comprenant : un arbre de rotation (22) ; une pluralité de pistons (26) configurés pour se déplacer en va-et-vient en fonction de l'arbre de rotation (22) ; et une pluralité de cylindres (24) qui forme une pluralité de chambres de travail (25) avec la pluralité de pistons (26), le procédé étant **caractérisé en ce qu'**il comporte l'étape de
fonctionnement de la pluralité de machines hydrauliques (20) dans un modèle de fonctionnement dans lequel il y a une différence de phase de rotation parmi les machines hydrauliques (20), la différence de phase de rotation étant déterminée en fonction d'un agencement d'une ou plusieurs chambres de travail cible (25) dans lesquelles un défaut de fonctionnement s'est produit, parmi la pluralité de chambres de travail (25).

11. Procédé de fonctionnement d'un appareil de génération d'énergie à énergie renouvelable (1) qui comprend : un rotor (4) configuré pour être entraîné en rotation par de l'énergie renouvelable ; une pompe hydraulique (10) configurée pour générer de l'huile sous pression en étant entraînée par le rotor (4) ; une pluralité de moteurs hydrauliques (20) configurés pour être entraînés par l'huile sous pression ; une pluralité de génératrices (8) qui sont chacune configurées pour être entraînées par l'un correspondant des moteurs hydrauliques (20) ; et une ligne à haute pression (30) disposée entre un côté de sortie de la pompe hydraulique (10) et un côté d'entrée de chacun des moteurs hydrauliques (20), la pluralité de moteurs hydrauliques (20) étant reliée en parallèle à la ligne à haute pression (30) et chacun comprenant : un arbre de rotation (22) ; une pluralité de pistons (26) configurés pour se déplacer en va-et-vient en fonction de l'arbre de rotation (22) ; et une pluralité de cylindres (24) qui forme une pluralité de chambres de travail (25) avec la pluralité de pistons (26), le procédé comportant l'étape de
fonctionnement de la pluralité de moteurs hydrauliques (20) dans un modèle de fonctionnement dans lequel il y a la différence de phase de rotation parmi les moteurs hydrauliques (20), selon le procédé selon la revendication 10.

12. Procédé de fonctionnement d'un appareil de génération d'énergie à énergie renouvelable (1) selon la revendication 11, comportant en outre les étapes de :
arrêt du fonctionnement de l'appareil de génération d'énergie à énergie renouvelable s'il y a les une ou plusieurs chambres de travail cible (25) pendant le fonctionnement de l'appareil de génération d'énergie à énergie renouvelable, et un niveau de vibration de la pompe hydraulique (10) ou des moteurs hydrauliques (20) a dépassé une valeur prédéterminée ;
sélection d'un modèle de fonctionnement optimal dans lequel le niveau de vibration atteint un minimum quand les chambres de travail cible (25) sont disposées dans l'agencement, parmi une pluralité de modèles de fonctionnement parmi lesquels la différence de phase de rotation de la pluralité de moteurs hydrauliques (20) est modifiée ; et
redémarrage du fonctionnement de l'appareil de génération d'énergie à énergie renouvelable de telle sorte que la pluralité de moteurs hydrauliques (20) est actionnée dans le modèle de fonctionnement optimal.

13. Procédé de fonctionnement d'un appareil de génération d'énergie à énergie renouvelable (1) selon la revendication 12, comportant en outre l'étape de
sélection d'une ou plusieurs chambres de travail inactives (25) qui ne sont pas les chambres de travail cible (25) en plus des chambres de travail cible (25) de telle sorte que le niveau de vibration est encore réduit, dans un cas où le niveau de vibration n'est pas prédit pour tomber à la valeur prédéterminée ou moins même si le modèle de fonctionnement optimal est sélectionné,
selon lequel, dans l'étape de redémarrage du fonctionnement de l'appareil de génération d'énergie à énergie renouvelable, les chambres de travail cible (25) et les une ou plusieurs chambres de travail inactives (25) sont actionnées dans un état inactif dans lequel de l'énergie n'est pas convertie entre une énergie de rotation de l'arbre de rotation (22) et une énergie de pression dans les chambres de travail (25), et des chambres de travail (25) autre que les chambres de travail cible (25) et les une ou plusieurs chambres de travail inactives (25) sont actionnées dans un état actif dans lequel l'énergie est convertie.

14. Procédé de fonctionnement d'un appareil de génération d'énergie à énergie renouvelable (1) selon la revendication 13, comportant en outre l'étape de
sélection à nouveau d'un modèle de fonctionnement optimal pour les moteurs hydrauliques (20) de la pluralité de modèles de fonctionnement parmi lesquels la différence de phase de rotation des moteurs hydrauliques (20) est modifiée de telle sorte que le niveau de vibration est encore réduit, dans un cas où le niveau de vibration n'est pas prévu pour tomber à la valeur prédéterminée ou moins même si le modèle de fonctionnement optimal est sélectionné.

15. Procédé de fonctionnement d'un appareil de génération d'énergie à énergie renouvelable (1) selon l'une quelconque des revendications 12 à 14, selon lequel, dans l'étape de sélection du modèle de fonctionnement optimal, le modèle de fonctionnement optimal est choisi de telle sorte que le niveau de vibration est le minimum à une sortie de référence de l'appareil de génération d'énergie à énergie renouvelable déterminée en fonction d'une quantité de l'énergie renouvelable qui apparaît le plus souvent.
